# EUROPEAN PATENT APPLICATION

(11) **EP 1 550 890 A1**
(43) Date of publication of application: **06.07.2005**
(21) Application number: 03258248.8
(22) Date of filing: 30.12.2003
(51) Int. Cl.: G02B 6/44

(54) **Optical fibre cables**

(71) Applicant: PIRELLI GENERAL plc, London W1K 4QZ (GB)
(72) Inventor: The designation of the inventor has not yet been filed
(74) Representative: Baldwin, Mark

(57) **Abstract**

An optical fibre cable (10) comprises a plurality of optical fibre units (12) and sheathing (18) surrounding the optical fibre units. The optical fibre units (12) comprise a plurality of optical fibres (22) encased in a first resin layer (24) having a first modulus of elasticity and a second resin layer (26) surrounding the first resin layer and having a second modulus of elasticity that is higher than said first modulus of elasticity. The optical fibre cable (10) is particularly suitable for the production of a relatively reduced diameter cable suitable for installation by blowing along a previously installed duct.

## Description

The invention relates to optical fibre cables and particularly to optical fibre cables suitable for installation by blowing.

EP-A-0 108 590 discloses a method for installing optical fibres by blowing. In this method, fibres are installed along previously installed ducting using fluid drag of a gaseous medium that is passed through the ducting in the desired direction of advance of the fibres. The method uses viscous drag forces to install an optical fibre unit that is supported on a cushion of the gaseous medium, which is usually air.

The Pirelli Company manufactures an optical fibre cable for installation by blowing that is marketed under the trade name hydra™. This cable is designed to be installed in ducts with an internal diameter of 8 mm and an external diameter of 10 mm. The cable comprises a plurality of optical fibre units packed around an axially extending strength member. The optical fibre units comprise a gel-filled polymeric tube that houses a plurality of optical fibres. In a seventy-two-fibre cable, there are six of these tubes, each containing twelve optical fibres. The optical fibre units are stranded around the strength member to produce an optical fibre core that is then sheathed with high-density polyethylene (HDPE) or nylon. The overall diameter of the optical fibre units is 1.9 mm and the diameter of the seventy-two fibre cable is 6.5 mm.

This cable has proved successful. However, it remains desirable to be able to produce optical cables for installation by blowing that are still smaller in diameter. A smaller diameter cable increases the potential installation distance and should enable installation into smaller diameter tubes/ducts, the use of which would enable telecoms operators to configure more flexible networks.

The invention provides an optical fibre cable comprising a plurality of optical fibre units and sheathing surrounding said plurality of optical fibre units, said optical fibre units comprising a plurality of optical fibres encased in a first resin layer having a first modulus of elasticity and a second resin layer surrounding said first resin layer and having a second modulus of elasticity that is higher than said first modulus of elasticity.

The invention also includes an installation comprising at least one such optical fibre cable housed in ducting.

The invention also includes a method of providing such an installation in which at least one such optical fibre cable is installed in such ducting by blowing it along the ducting by means of a gaseous medium.

The invention also includes a method of manufacturing an optical fibre cable, said method comprising producing an optical fibre unit by encasing a plurality of optical fibres in a first resin layer having a first modulus of elasticity and surrounding said first resin layer with a second resin layer having a second modulus of elasticity that is higher than said first modulus of elasticity, and assembling a plurality of said optical fibre units in sheathing therefor.

In order that the invention may be well understood, some embodiments thereof, which are given by way of example only, will now be described with reference to the drawings, in which:
Figure 1 is a schematic representation of an optical fibre cable according to the invention;
Figure 2 is a schematic representation of an optical fibre unit of the optical fibre cable of Figure 1; and
Figure 3 is a schematic representation of a method of manufacturing the optical fibre unit of Figure 2.

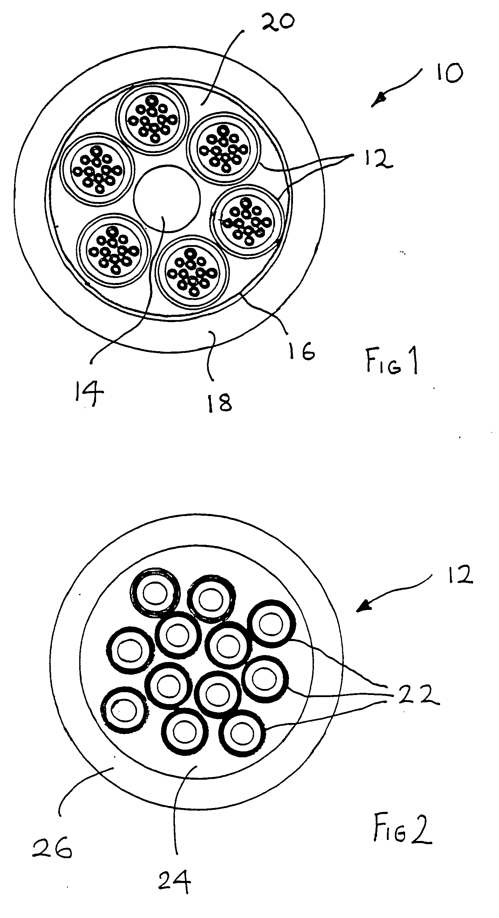

Referring to Figures 1 and 2, an optical fibre cable 10 comprises a plurality of optical fibre units 12 stranded around an axially extending central strength member 14. The strength member 14 is preferably made of a non-metallic material such as, for example, a glass reinforced plastic. The cable core defined by the strength member 14 and optical fibre units 12 is wrapped with a paper or polymeric tape 16, which is encased in sheathing 18. The sheathing 18 may be polymeric or a resin. Suitable materials for the sheathing include polymers such as nylon or HDPE, or a UV-cured resin. Although in the embodiment, the sheathing is shown as consisting of a single layer, it will be appreciated that multi-layer sheathing can be provided instead.

Although not shown, a conventional rip cord may be provided internally of the sheathing 16 in order to facilitate access to the optical fibre units 12.

The voids 20 between and around the optical units 12 may be filled with water blocking gels or powders. Alternatively, or in addition, a water blocking tape may be provided. Such water blocking measures are well known to those skilled in the art and will not be described in greater detail herein.

Referring particularly to Figure 2, the optical fibre units 12 each comprise a plurality of optical fibres 22 encapsulated in a first resin layer 24. A second resin layer 26 surrounds the first resin layer 24. The optical fibres 22 may be of any type, including any conventional single or multimode fibre. The second resin layer 26 has a modulus of elasticity that is higher than that of the first resin layer 24. Each layer 24, 26 comprises a UV-cured resin. The softer first, or inner, layer 24 provides a soft buffer layer for the optical fibres 22. The second, or external, layer 26, is harder and more robust so as to provide protection for the buffer layer 24 and the optical fibres 22.

In one possible embodiment, the resin layers are made up from a UV-curable acrylate resin having the following properties:

| Tensile Strength: | |
|---|---|
| First Layer | 1.3 MN/m² |
| Second Layer | 30 MN/m² |

| Tensile Modulus at 2.5% Strain: | |
|---|---|
| First Layer | 1.0 MN/m² |
| Second Layer | 600 MN/m² |

| % Elongation at Break: | |
|---|---|
| First Layer | 156% |
| Second Layer | 40% |
| Shrinkage on Cure for both layers: | 3% |

Preferred examples are DSM Cablelite 3287-9-39A for the first layer and DSM Cablelite 3287-9-75 for the second layer.

The resins used for the first and second layers 24, 26 are selected to provide an optical fibre unit 12 that is sufficiently flexible to permit stranding around the strength member 14, but still stiff enough not to compromise installation performance. It has been found that by encapsulating the optical fibres 22 in a two-layer resin matrix 24, 26, it is possible to reduce the diameter of the optical fibre units as compared with the optical fibre units used in the hydra™ optical fibre cable. Examples of the diameter of optical fibre units 12 encapsulated in a two-layer resin matrix are as follows:

| Number of Fibres | Nominal diameter of optical fibre unit. |
|---|---|
| 2 | 0.8 mm |
| 4 | 0.8 mm |
| 6 | 1.0 mm |
| 8 | 1.2 mm |
| 12 | 1.4 mm |

Multiples of these units can then be stranded together to form optical fibre cables 10 that will have a reduced diameter as compared with optical fibre cables produced with the optical fibre units used in the hydra™ optical fibre cable. This is in part due to the reduced diameter of the optical fibre units and in part due to the reduction in the diameter of the strength member that is made so that the stranded optical fibre units pack correctly around the strength member. Typically the optical fibre units will be stranded together to form twenty-four, forty-eight, seventy-two, ninety-six or one hundred and forty-four fibre cables. Examples of such optical fibre cables produced using the optical fibre units 12 are as follows:

| Number of Fibres | Number of optical fibre units | Nominal Diameter of Cable |
|---|---|---|
| 24 | 4 x 6 fibres | 4.0 mm |
| 48 | 4 x 12 fibres | 4.0 mm |
| 72 | 6 x 12 fibres | 5.0 mm |
| 96 | 8 x 12 fibres | 7.0 mm |
| 144 | 12 x 12 fibres | 8.5 mm |

It will be seen that whereas the seventy-two-fibre hydra™ optical fibre cable described above has a diameter of 6.5 mm, a seventy-two-fibre cable according to the described embodiments has a diameter of 5.0 mm. A reduction in diameter of 1.5 mm in this context is significant. It should permit installation over greater distances, enable the optical fibre cable to be installed in smaller ducting (for example, for some cables ducting with an internal diameter of 5.5 mm and an external diameter of 7.0 mm might be used), enable the configuring of more flexible networks in existing customer networks and enable more optical fibres to be installed in congested networks.

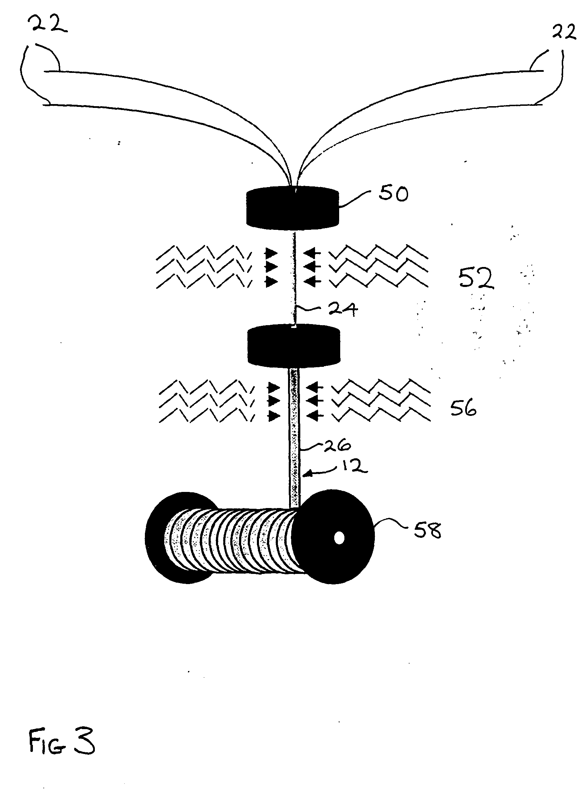

The optical fibre cable 10 may be produced using conventional extrusion and stranding procedures, which is both convenient and economical. Such procedures will be well-known to those skilled in the art. By way of example, a method of producing an optical fibre 10 will now be described with particular reference to Figure 3.

Referring to Figure 3, an optical fibre unit 12 is formed from four optical fibres 22 fed into a steel die 50 of a resin layer applicator. The resin layer applicator (not shown in full) contains the resin from which the first resin layer is formed in liquid form at a predetermined temperature. As the optical fibres 22 are fed through the die 50, they are coated with liquid resin. Curing is performed in a UV curing oven downstream of the die 50, indicated schematically at 52. The optical fibres 22 with the thus-applied first resin layer 24 are then fed into a second steel die 54, in which, in the same way as in the die 50, the second resin layer 26 is applied. A UV oven 56 is used to cure the second resin layer 26 downstream of the second steel die 54 and the thus completed optical fibre unit 12 is wound onto a bobbin 58. The length of the optical fibre unit 12 wound onto the bobbin 58 will vary according to the length of the optical fibres 22. A typical length would be 12 km.

In the next stage of production, the required number of optical fibre units 12 is unwound from the respective bobbins 58 and stranded around the central strength member 14 using a conventional stranding process. In a presently preferred embodiment of a seventy-two-fibre optical cable 10, six optical fibre units 12, each containing twelve optical fibres 22, are stranded around a glass reinforced plastics strength member having a tensile modulus of 50 MN/m² and a diameter of approximately 1.3 mm.

The package produced by stranding the optical fibre units 12 around the strength member 14 then has tapes, water blocking gels and powders and sheathing 18 applied in a conventional manner. For example, the package could be sheathed with nylon or HDPE using a conventional extrusion process.

While the optical fibre cable 10 is intended for, and particularly suitable for, installation by blowing, for example by the methods disclosed by EP-A-0 108 590, it will be appreciated that it may be installed by alternative methods, not necessarily requiring blowing.

## Claims

1. An optical fibre cable comprising a plurality of optical fibre units and sheathing surrounding said plurality of optical fibre units, said optical fibre units comprising a plurality of optical fibres encased in a first resin layer having a first modulus of elasticity and a second resin layer surrounding said first resin layer and having a second modulus of elasticity that is higher than said first modulus of elasticity.

2. An optical fibre cable as claimed in claim 1, wherein said optical fibre units are stranded around an axially extending strength member.

3. An optical fibre cable as claimed in claim 2, wherein said strength member is made of a glass reinforced plastics material.

4. An optical fibre cable as claimed in claim 2 or 3, wherein said optical fibre units and strength member are wrapped by a tape.

5. An optical fibre cable as claimed in any one of the preceding claims, wherein spaces between the optical fibre units are filled with a water blocking gel or powder.

6. An optical fibre cable as claimed in any one of the preceding claims, wherein the first resin layer has a tensile strength of approximately 1.3 MN/m².

7. An optical fibre cable as claimed in any one of the preceding claims, wherein the second resin layer has a tensile strength of approximately 30 MN/m².

8. An optical fibre cable as claimed in any one of the preceding claims, wherein at least one of said first and second resin layers is a UV curable acrylate resin.

9. An installation comprising ducting housing at least one optical fibre cable as claimed in any one of the preceding claims.

10. A method of providing an installation as claimed in claim 9, wherein said at least one optical fibre cable is installed by blowing it along said ducting by means of a gaseous medium.

11. A method of manufacturing an optical fibre cable, said method comprising producing an optical fibre unit by encasing a plurality of optical fibres in a first resin layer having a first modulus of elasticity and surrounding said first resin layer with a second resin layer having a second modulus of elasticity that is higher than said first modulus of elasticity, and assembling a plurality of said optical fibre units in sheathing therefor.

12. A method as claimed in claim 11, comprising wrapping said plurality of optical units in a polymeric or paper tape.

13. A method as claimed in claim 11 or 12, comprising stranding said plurality of optical fibre units around an axially extending centrally disposed strength member.

14. A method as claimed in any one of claims 11 to 13, wherein said first resin layer is sprayed onto said optical fibres in liquid form and is cured in a UV oven.

15. A method as claimed in any one of claims 11 to 14, wherein said second resin layer is sprayed onto said first resin layer in liquid form and cured in a UV oven.
